# EUROPEAN PATENT APPLICATION

(11) **EP 4 501 118 A1**
(43) Date of publication of application: **05.02.2025**
(21) Application number: 23775094.8
(22) Date of filing: 24.03.2023
(51) Int. Cl.: A23C 21/06, A23C 19/00, A23G 3/34

(54) **WHEY PROCESSED FOOD PRODUCT**

(30) Priority: 25.03.2022 JP 2022050934
(71) Applicant: MEIJI CO., LTD, Chuo-ku Tokyo 104-8306 (JP)
(72) Inventor: MIYAGAWA, Atsumi, Hachioji-shi, Tokyo 192-0919 (JP); DEGUCHI, Chihiro, Hachioji-shi, Tokyo 192-0919 (JP)
(74) Representative: TBK
(86) International application number: PCT/JP2023/011849
(87) International publication number: WO 2023/182501

(57) **Abstract**

The present invention provides a whey processed food having excellent texture. This whey processed food contains lactose in a proportion of 20 mass% or more, wherein the proportion of lactose crystals in the whey processed food is 3 to 5%, and the proportion of coarse lactose crystals in the lactose crystals of the whey processed food is 10% or less, and the proportion of fine lactose crystals in the lactose crystals of the whey processed food is 70% or more.

## Description

### Technical Field

The present invention relates to a whey processed food produced using whey as a raw material.

### Background Art

Raw milk is processed into various dairy products, such as milk, cheese, yoghurt, butter, and cream, by processing techniques, which are eaten by people. However, in a cheese production process, only about 10% of raw milk is formed into cheese, and the remaining about 90% is discarded as whey (milk serum). Whey, which is a by-product in the cheese production process, contains large amounts of various essential amino acids, proteins, vitamins, and sugars, and is also a nutritionally excellent food material. However, due to the likelihood of denaturation and low preservability as well as its distinctive flavor, whey is underutilized in the food industry. Therefore, only 59% of all of the whey discharged worldwide is used for industrial purposes, and the remaining 41% is either used as livestock feeds or agricultural fertilizers, or discarded as industrial waste. Accordingly, making effective use of whey and expanding its applications are important responsibilities for, in particular, dairy product manufacturing companies, in order to realize a sustainable society through, for example, the effective use of unused milk resources and the reduction of waste for environmental protection.

One example of denaturation of whey is the denaturation of lactose contained in whey. In general, it is known that in food and beverages with a high lactose concentration, lactose crystals are formed and become gigantic, which causes a coarse feel on the tongue and results in loss of smooth texture. This phenomenon is more prominent at higher lactose concentrations. With respect to brown whey cheese as well, which is one of the whey processed foods with a high lactose concentration, the influence of lactose crystals on texture has been noted. It is known that the ideal crystal size is 20 to 30 um and that when the crystal size is more than 100 µm, roughness is felt on the tongue (Non-Patent Literature (NPL) 1). Therefore, in order to make effective use of whey containing a large amount of lactose as a food material, the crystallization of lactose contained in whey and the growth of crystals to a gigantic size must be prevented in order to maintain a good texture.

As a method for inhibiting crystallization of lactose in whey, a method comprising desalting whey through nanofiltration and then subjecting the desalted whey to lactase degradation using a lactose-degrading enzyme is known (Patent Literature (PLT) 1). According to this method, a lactose-degraded desalted whey characterized by having good flavor due to desalting, having a low viscosity even in the form of a concentrate thereof due to lactose degradation, and causing no crystallization of lactose during the transportation of the concentrate can be obtained. Further, although it is not a method for inhibiting the crystallization of lactose, using a noncrystalline carbohydrate as a crystal precipitation regulating agent is known as a method for inhibiting the crystallization of mannitol (Non-Patent Literature (NPL) 2).

### Citation List

### Patent Literature

PTL 1: JP2004-129579A
PTL 2: JP2007-215450A

### Non-patent Literature

NPL 1: Siv Skeie, Roger K. Abrahamsen, "Chapter 45: Brown Whey Cheese," Cheese: Chemistry, Physics and Microbiology, 4th edition

### Summary of Invention

### Technical Problem

An object of the present invention is to provide a whey processed food with a good texture in order to make effective use of whey and expand its applications. More specifically, an object of the present invention is to provide a whey processed food with less roughness on the tongue and smooth texture on the tongue, as well as with less adhesion to the teeth during chewing and good non-stickiness to the teeth.

### Solution to Problem

The present inventors conducted intensive research to solve the above problem, and found the following. When the lactose crystal content of a whey processed food containing lactose at a high concentration of 20 mass% or more is reduced, a smooth texture on the tongue without roughness is provided, but the problem of high adhesion to the teeth and poor non-stickiness during chewing arises. Therefore, the present inventors conducted further research to obtain a whey processed food with a good texture that is satisfactory in both smoothness and non-stickiness. As a result, the inventors found that this can be achieved by reducing the lactose crystal content to 3 to 5%, and also adjusting the proportions of coarse crystals and fine crystals in lactose crystals to appropriate levels.

The present invention has been accomplished based on these findings and further research, and includes the following embodiments.
Item 1: A whey processed food comprising lactose in a proportion of 20 mass% or more, wherein
   the proportion of lactose crystals in the whey processed food is 3 to 5%, the lactose crystals comprising coarse lactose crystals and fine lactose crystals,
   the coarse lactose crystals accounting for 10% or less of the lactose crystals in the whey processed food, and
   the fine lactose crystals accounting for 70% or more of the lactose crystals in the whey processed food; and
   wherein, based on the area of the main peak of lactose monohydrate crystals (standard) detected in the range of 2θ = 19.9 to 20.4° in an X-ray diffraction pattern measured using an X-ray diffractometer,
   the proportion of the lactose crystals is calculated from the peak area of a test whey processed food at the position corresponding to the position of the main peak of the lactose monohydrate crystals (standard);
   the proportion of the coarse lactose crystals in the lactose crystals is a percentage of the total area of coarse lactose crystal particles, based on the total area of lactose crystal particles in the whey processed food taken as 100%, as determined by phase-contrast microscopy; and
   the proportion of the fine lactose crystals in the lactose crystals is a percentage of the total area of fine lactose crystal particles, based on the total area of lactose crystal particles in the whey processed food taken as 100%, as determined by phase-contrast microscopy.
Item 2: The whey processed food according to Item 1, wherein the whey processed food is brown whey cheese, brown cheese, gjetost, brunost, or caramel.
Item 3: A method for imparting to a whey processed food a smooth texture on the tongue and less adhesion to the teeth during chewing, the whey processed food comprising lactose in a proportion of 20 mass% or more,
   the method comprising
   adjusting the proportion of lactose crystals in the whey processed food to 3 to 5%, the lactose crystals comprising coarse lactose crystals and fine lactose crystals,
   adjusting the proportion of the coarse lactose crystals to account for 10% or less of the lactose crystals in the whey processed food, and
   adjusting the proportion of the fine lactose crystals to account for 70% or more of the lactose crystals in the whey processed food,
   wherein, based on the area of the main peak of lactose monohydrate crystals (standard) detected in the range of 2θ = 19.9 to 20.4° in an X-ray diffraction pattern measured using an X-ray diffractometer, the proportion of the lactose crystals is calculated from the peak area of a test whey processed food at the position corresponding to the position of the main peak of the lactose monohydrate crystals (standard);
   the proportion of the coarse lactose crystals in the lactose crystals is a percentage of the total area of coarse lactose crystal particles, based on the total area of lactose crystal particles in the whey processed food taken as 100%, as determined by phase-contrast microscopy; and
   the proportion of the fine lactose crystals in the lactose crystals is a percentage of the total area of fine lactose crystal particles, based on the total area of lactose crystal particles in the whey processed food taken as 100%, as determined by phase-contrast microscopy.

### Advantageous Effects of Invention

According to the present invention, a whey processed food with less roughness on the tongue and a smooth texture on the tongue as well as less adhesion to the teeth during chewing and good non-stickiness to the teeth can be provided. The present invention can solve the problem of failing to make effective use of whey in spite of its excellent nutritional properties and thereby allow whey to be effectively used as a food material.

### Brief Description of Drawings

Fig. 1 shows X-ray diffraction images of whey processed foods A to E prepared in Experimental Example 1. The main peak detected in the range of 20 = 19.9 to 20.4° was used to calculate the proportion of lactose crystals.
Fig. 2 shows images obtained by observing the crosssectional structure of a slice of whey processed food I prepared in Experimental Example 1 under a phase-contrast microscope (objective magnification: x10).

### Description of Embodiments

### (I) Whey processed food

The whey processed food of the present invention (also referred to below as "the food") is a food produced by using whey as a raw material.

Whey is a byproduct generated during cheese production, and is obtained by removing almost all the fat and casein from the milk of mammals. Examples of whey include sweet whey, sour whey, whey concentrates obtained by concentrating these types of whey, and whey powders obtained by drying and powdering these types of whey. Examples of mammals from which milk is obtained include cows, water buffaloes, goats, and sheep. Among these, cows are preferable, and dairy cows are particularly preferable.

The food is produced by using the whey stated above as a raw material, and has the following features:
(1) lactose content: 20% or more,
(2) proportion of lactose crystals: 3 to 5%,
(3) proportion of coarse lactose crystals in the lactose crystals in whey processed food: 10% or less,
   proportion of fine lactose crystals in the lactose crystals in whey processed food: 70% or more.

These features are described below.

Note that in this specification, "solids content" refers to the content of components other than water. In this specification, "solids concentration" refers to the percentage of the solids content of a target (e.g., whey processed food) and is expressed as a percentage of the solids content of a target, with the total amount of the target (wet mass) being defined as 100 mass%. In this specification, a component "in terms of solids content" refers to the amount of the component in a target (e.g., whey processed food) calculated in terms of solids content. Specifically, based on the total amount of the solids content (dry weight) of a target taken as 100 mass%, it means the proportion (mass %) of the component relative to the total solids content of the target.

### (1) Lactone content

The lactose content of the whey processed food can be measured using high-performance liquid chromatography. The details of the measurement method and conditions are explained in the Experimental Examples described below.

The lactose content of the whey processed food may be 20% or more. Examples of the lower limit include, but are not limited to, 30 mass%, 35 mass%, 39 mass%, or 40 mass%. Examples of the upper limit include, but are not limited to, about 60 mass%, 51 mass%, or 49 mass%. The lactose content of the whey processed food can be appropriately set within the range of 20 to 60 mass%. The lactose content of the whey processed food is preferably in the range of 20 to 51 mass%, more preferably 30 to 51 mass%, even more preferably 35 to 51 mass%, and particularly preferably 39 to 49 mass%, although these are not limitative.

The lactose content can be 27 mass% or more in terms of solids content. The lactose content is preferably within the range of 29 to 67 mass%, more preferably 40 to 64 mass%, and even more preferably 47 to 54 mass%. The amount of lactose in the food in terms of solids content can be calculated from the lactose content of the food and the solids concentration of the food as determined by the normal-pressure heat-drying method (sand mixing method) described below.

### (2) Proportion of lactose crystals

The proportion of lactose crystals in the whey processed food in the present invention is a percentage as determined, based on the area of the main peak of lactose monohydrate crystals (α type) (standard) detected in the range of 20 = 19.9 to 20.4° in an X-ray diffraction pattern measured using an X-ray diffractometer, from the area of the peak of a target whey processed food at the position corresponding to the position of the main peak as determined by the same method. The details of the measurement and calculation methods are described in Experimental Example 1 below.

Regarding the method for preparing test samples to be subjected to the measurement (measurement test samples), for example, test samples of a hard solid whey processed food with a solids concentration of, for example, 80 mass% or more, can be prepared by slicing the whey processed food to a thickness of 0.5 mm in the same manner as in Experimental Example 1. On the other hand, test samples of a semi-solid or soft solid whey processed food with a solids concentration of less than 80 mass% can be prepared according to the front-loading method, which is one of the test sample preparation methods used in powder X-ray diffraction measurement methods. Specifically, a test sample is placed in the recess (test sample-filling part) of a glass test sample holder having a square column shape with a depth of 0.5 mm and a bottom surface of 20 mm × 20 mm. The surface of the test sample is then rubbed with an edge of another glass plate so as to evenly (smoothly, uniformly) finish the surface of the test sample to be subjected to X-ray diffraction, and then cooling at 5°C to prepare a whey processed food test sample.

The proportion of lactose crystals in the whey processing food is preferably 3 to 5%, and can be appropriately set within this range.

### (3) Proportions of coarse lactose crystals and fine lactose crystals in whey processed food

The proportions of coarse lactose crystals and fine lactose crystals in lactose crystals in the whey processed food of the present invention are determined by phase-contrast microscopic observation. Specifically, the proportion of coarse lactose crystals in the lactose crystals is a percentage of the total area of coarse lactose crystal particles, based on the total area of lactose crystals particles taken as 100%, as determined by phase-contrast microscopy; and the proportion of fine lactose crystals in the lactose crystals is a percentage of the total area of fine lactose crystal particles, based on the total area of lactose crystals particles taken as 100%, as determined by phase-contrast microscopy. The details of the measurement and calculation methods, including the method for preparing test samples to be subjected to the measurement (measurement test samples), are explained in Experimental Example 1 below.

In the present invention, coarse lactose crystals refer to crystals whose equivalent circle diameter, as determined from the horizontal projected area of particles (lactose crystals particles) in a whey processed food observed under a phase-contrast microscope, is 30 µm or more. Similarly, fine lactose crystals refer to crystals whose equivalent circle diameter, as determined from the horizontal projected area of particles (lactose crystals particles) in a whey processed food observed under a phase contrast microscope, is 10 µm or less. The details of the method for measuring the horizontal projected area of particles using a phase-contrast microscope and the method for calculating the equivalent circle diameter are also explained in Experimental Example 1 below.

The proportion of coarse lactose crystals in the total lactose crystals is 10% or less, in terms of the total area of the lactose crystal particles corresponding to the coarse lactose crystals. The proportion of coarse lactose crystals in the total lactose crystals is not particularly limited as long as it is 10% or less. The proportion of coarse lactose crystals is preferably 8% or less, more preferably 5% or less, particularly preferably 3% or less, and even more preferably 0%.

The proportion of fine lactose crystals in the total lactose crystals is 70% or more in terms of the total area of the lactose crystal particles corresponding to the fine lactose crystals. The proportion of fine lactose crystals in the total lactose crystals is not particularly limited as long as it is 70% or more. The proportion of fine lactose crystals is preferably 72% or more, more preferably 80% or more, particularly preferably 90% or more, and even more preferably 95% or more.

The method for producing a whey processed food is not particularly limited as long as it is a method that uses whey as a raw material and is capable of producing a whey processed food having the above features. For example, a usable method comprises performing a lactose degradation process using the lactose degrading enzyme described in PTL 1, which is cited above as a prior patent, to inhibit the crystallization of lactose and adjusting the proportion of lactose crystals and the proportions of coarse lactose crystals and fine lactose crystals in the lactose crystals (hereinafter collectively referred to as the "features of the lactose crystals") to the ranges of the present invention described above. Similarly, another usable method is using the crystal precipitation regulating agent described in PTL 2 to inhibit the formation of lactose crystals, thereby providing lactose crystals with the features described above. Examples of usable crystal precipitation regulating agents include starch syrup, reduced syrup, reduced maltose syrup, coupling sugar, oligosaccharides, polysaccharides, and the like described in PTL 2. Trehalose, which has a high glass transition temperature and ice crystal growth inhibiting effects, can also be used. The crystal precipitation regulating agent is preferably trehalose, as shown in the Experimental Examples described below.

The details of the method for producing the whey processed food of the present invention by using trehalose as a crystal precipitation regulating agent are as described in the Experimental Examples. As explained in the Experimental Examples, the whey processed food of the present invention having the features of the lactose crystals described above can be prepared by adjusting the proportion of trehalose and adjusting the mixing conditions (number of stirring revolutions, temperature, and pressure) for a composition containing whey and trehalose. For example, such a method comprises the following steps: a whey blending solution with a lactose content of 20 mass% or more containing at least whey, trehalose, and water is concentrated under reduced pressure with heating and stirring to a solids content of at least 75 mass%; the obtained concentrate is subjected to pressure heat treatment and then to continuous shearing using a twin-shaft mixer under heating conditions (kneading processing); and the resulting product is then extruded and molded by an extruder (extruder processing). The production method of the present invention can be any method that is capable of producing the whey processed food of the present invention having the features of the lactose crystals described above. The present invention is not limited by the production method.

Whether the whey processed food of the present invention is obtained or not can be confirmed by measuring the lactose content and the proportion of lactose crystals in the whey processed food and the proportions of coarse lactose crystals and fine lactose crystals in the lactose crystals by the methods described above.

The whey processed food of the present invention can be any solid or semi-solid whey processed food having the features described above. As long as these conditions are satisfied, the whey processed food can also be prepared by incorporating other ingredients as raw components other than whey. Examples of such other ingredients include raw milk, milk, or milk products (e.g., skimmed milk, concentrated milk, reduced milk, whole milk powder, skimmed milk powder, cream, butter, butter oil, casein, and like milk proteins), goat milk, reducing sugar, gelatin, and stabilizers.

In the present invention, "solid" refers to a form that does not deform under its own weight even when allowed to stand at 25°C under atmospheric pressure for at least 24 hours. "Semi-solid" refers to a form that is deformed by its own weight when allowed to stand under the above-mentioned conditions. The whey processed food of the present invention may have a solids concentration of 55 mass% or more. Such whey processed foods include paste-like (semi-fluid, unmolded) foods, soft solid foods, and hard solid foods. Although not limitative, the solids concentrations in paste, soft solid, and hard solid whey processed foods are respectively about 55 mass% to less than about 75 mass%, about 75 mass% to less than 80 mass%, and about 80 mass% to less than 90 mass%.

The solids concentration of the test sample (whey processed food) can be determined by the normal-pressure heat-drying method (sand mixing method) described below. Specifically, after sea sand and a glass rod are placed in a weighing dish and a constant volume is measured in that state, a test sample and distilled water are added thereto and dried in a dryer at 99°C for 4 hours. The water content of the test sample is then determined from the difference in weight of the test sample before and after drying. The mass of the solids content of the test sample (before drying) is determined from the water content thus measured. The solids concentration can be calculated therefrom.

The content of one or more proteins contained as ingredients other than lactose in the food is not limited and can be, for example, in the range of 7 to 12 mass%, preferably 7 mass% or more and 10 mass% or less, in terms of solids content. The content of such proteins is preferably in the range of 8 to 9 mass%.

The total protein content of the food can be determined by using the Kjeldahl method. The details of the measurement are explained in the Examples section. The protein content of the food in terms of solids content can be calculated from the total protein content of the food and the solids concentration of the food determined from the normal-pressure heat-drying method (sand mixing method) described above.

The whey processed food of the present invention may also contain a lipid as an ingredient other than lactose and whey as long as the lactose content and the features of the lactose crystals described above are not impaired. Although this is not limitative, the lipid content can be selected from a range of 9 mass% or more, in terms of solids content. The lipids content is preferably in the range of 22 to 41 mass%, and more preferably from 26 to 29 mass%.

The lipid content of the food of the invention can be determined by the Reese-Gottlieb method. The details are explained in the Examples section. The amount of lipid in the food in terms of solids content can be calculated from the lipid content of the food and the solids concentration of the food determined from the normal-pressure heat-drying method (sand mixing method) described above.

Examples of the whey processed food that is the target of the present invention include, but are not limited to, the brown whey cheese, gjetost, and caramels described below. Although not limitative, these whey processed foods are known to be the following foods.
Brown whey cheese: foods with a solids concentration of 70 to 85 mass% and a lipid content of 10 to 30 mass%, obtained by adding milk and cream to whey and heating and concentrating the resulting mixture. Note that although brown whey cheese is also referred to as brown cheese or brunost in some countries and regions, they all refer to the same whey processed food.
Gjetost: foods with a solids concentration of 70 to 85 mass% and a lipid content of 10 to 30 mass%, obtained by adding milk and cream to whey and heating and concentrating the resulting mixture; the milk used therein is entirely or partially derived from goat milk.
Caramels: foods with a soft candy-like structure flavored with a milky taste and prepared using dairy raw materials, wherein a whey processed food is used as one of the dairy raw materials.

The whey processed food further includes articles produced by adding milk or milk fat to whey and obtained by concentration and drying. Such articles include products having the following features:
(a) milk fat content is 5 mass% or more, based on the total dry weight (in terms of solids content);
(b) solids content is 70 mass% or more and 85 mass% or less, based on the total weight (solids concentration); and
(c) a molded product or a moldable product.

### (II) Method for improving the texture of whey processed food

The present invention provides a method for imparting to a whey processed food a smooth texture on the tongue and less stickiness to the teeth during chewing, the whey processed food containing lactose in a proportion of 20 mass% or more. This method can be implemented by adjusting the proportions of lactose crystals in the whey processed food containing lactose in a proportion of 20 mass% or more, to the following levels:
(1) proportion of lactose crystals: 3 to 5%;
(2) proportion of coarse lactose crystals in the lactose crystals of the whey processed food: 10% or less, and
   proportion of fine lactose crystals in the lactose crystals of the whey processed food: 70% or more.

The preferable ranges of these proportions are as described in (I). All the descriptions thereof in (I) can be incorporated herein by reference. Each term and the method for adjusting the lactose content and the proportions of the lactose crystals herein are also as described in (I). All the descriptions thereof in (I) can be incorporated herein by reference.

In the above, the terms "including" and "containing" herein include the meanings "consisting of" and "substantially consisting of."

### Contribution to the Sustainable Development Goals (SDGs)

The present invention can be used as a means for achieving the sustainable development goals (SDGs). The present invention can be used to contribute to the achievement of the sustainable development goals (SDGs) and targets.

Specifically, the sustainable development goals (SDGs) are as follows ("Transforming our world: the 2030 Agenda for Sustainable Development," Ministry of Foreign Affairs, internet (https://www.mofa.go.jp/mofaj/gaiko/oda/sdgs/pdf/000101401.pdf) .
Goal 1: End poverty in all its forms everywhere.
Goal 2: End hunger, achieve food security and improved nutrition and promote sustainable agriculture.
Goal 3: Ensure healthy lives and promote the well-being of all people of all ages.
Goal 4: Provide inclusive and equitable quality education for all and promote lifelong learning opportunities.
Goal 5: Achieve gender equality and empower all women and girls.
Goal 6: Ensure availability and sustainable management of water and sanitation for all.
Goal 7: Ensure access to affordable, reliable, sustainable and modern energy for all.
Goal 8: Promote inclusive and sustainable economic growth and full and productive employment and decent work for all.
Goal 9: To build resilient infrastructure, promote inclusive and sustainable industrialization and foster innovation.
Goal 10: Reduce inequalities within and between countries.
Goal 11: To achieve inclusive, safe, resilient and sustainable cities and human settlements.
Goal 12: Ensure sustainable production and consumption patterns.
Goal 13: Take urgent measures to mitigate climate change and its impacts.
Goal 14: Conserve and sustainably use marine and offshore resources for sustainable development.
Goal 15: Protect, restore and promote sustainable use of terrestrial ecosystems, manage forests sustainably and combat desertification, as well as halt and restore land degradation and prevent biodiversity loss.
Goal 16: Promote peaceful and inclusive societies for sustainable development, provide access to justice for all and build effective, accountable and inclusive institutions at all levels.
Goal 17: Strengthen the means of implementation for sustainable development and revitalize the global partnership.

The present invention can contribute, in particular, to the achievement of Goal 2 (end hunger, achieve food security and improved nutrition and promote sustainable agriculture) and Goal 3 (ensure healthy lives and promote the well-being of all people of all ages). Specifically, the present invention provides whey (which is a food material with excellent nutritional properties containing large amounts of various essential amino acids, proteins, vitamins, and sugars) as a whey processed food and can thereby contribute to providing a safe and sufficient food supply for all people, including young girls, pregnant or lactating women, and the elderly.

Further, in particular, the present invention can contribute to the achievement of Goal 9 (build resilient infrastructure, promote inclusive and sustainable industrialization, and foster innovation). Specifically, the technique of the present invention, which inhibits the denaturation of whey, has created a new added value for whey and thereby promotes technological development, research and innovation, such as industrial diversification and the creation of added value for products, to thereby increase the efficiency of resource use and the expansion and efficiency of industrial processes, whereby innovation can be promoted in a sustainable and resilient manner.

The present invention can also contribute to achieving Goal 12 (ensuring sustainable production and consumption patterns). Specifically, food loss in production and supply chain companies can be reduced by enabling cheese manufacturers to make effective use of whey, which has often been discarded in cheese production processes, as a whey processed food. Further, sustainable production and consumption patterns can be ensured through sustainable development and development in harmony with nature, for example, by halving food waste.

Furthermore, the present invention can also contribute to achieving the targets associated with each of the goals listed in "Transforming our world: the 2030 Agenda for Sustainable Development."

### Examples

The present invention is described below with reference to Experimental Examples in order to facilitate the understanding of the structural feature and effects of the present invention. However, the invention is not limited in any way by the Experimental Examples. The following experiments were carried out at room temperature (25 ± 5°C) under atmospheric pressure conditions, unless otherwise mentioned. Hereinafter, "%" means "mass %" and "part" means "parts by mass," unless otherwise mentioned.

### Experimental Example 1

Nine different types of whey processed foods A to I were produced and the lactose content (mass %), proportions of lactose crystals (%), and crystal size (um) of each whey processed food were determined. Further, whey processed foods A to I were evaluated for texture (texture on the tongue and non-stickiness to the teeth).

The raw materials used in the production of the whey processed foods were as follows:
Whey powder: dried whey powder (100% whey), lactose content 80%, protein content 12%, produced by Meiji Corporation;
Cream: produced by Meiji Corporation, fat content 47%, lactose content 3%.

Note that cream falls under the category of "raw milk, milk or special milk from which ingredients other than milk fat have been removed" as prescribed in the Ministerial Ordinance on "Milk and Dairy products Concerning Compositional Standards, etc."
Trehalose: produced by Hayashibara Co., Ltd.

Further, the standard product used to determine the lactose content and the proportion of lactose crystals was as follows:
lactose monohydrate crystals (α-type): lactose monohydrate (100%), produced by Fujifilm Wako Pure Chemical Industries Ltd.;
hereafter referred to as lactose crystals (standard).

### (1) Production of whey processed foods A to I

Whey blending solutions A to E were prepared by mixing ingredients in the proportions shown in Table 1. The lactose content of each whey blending solution was 29%.

**Table 1**

| Raw material | Whey blending solutions (mass%) | | | | |
|---|---|---|---|---|---|
| | A | B | C | D | E |
| Whey powder | 30 | 30 | 30 | 30 | 30 |
| Cream | 35 | 35 | 35 | 35 | 35 |
| Trehalose | 0 | 3 | 5 | 10 | 15 |
| Water | Bal. | Bal. | Bal. | Bal. | Bal. |
| Total | 100 | 100 | 100 | 100 | 100 |

Each of the obtained whey blending solutions was heated to 60 to 70°C in a continuous-heating vacuum kettle(produced by Mihama Seisakusho Co., Ltd.) while stirring at 20 to 60 rpm with a rotation radius of 0.175 m and at 0.37 to 1.1 m/s, and concentrated under vacuum (reduced) pressure (gauge pressure in the kettle (relative pressure): -20 kPa to -50 kPa, absolute pressure: about 80 kPa to 50 kPa) for 5 to 60 minutes until a solids content of 80% was achieved. After the preparation was concentrated to a solids content of 80%, the concentrate was heated to 110 to 120°C under pressure (gauge pressure (relative pressure) of the heater: 10 kPa to 20 kPa, absolute pressure: about 110 kPa to 120 kPa) until the concentrate turned brown. The product was then extruded by an extruder and cooled to 4°C or lower to obtain solid whey processed foods A to E with a solids concentration of 84%.

Separately, whey blending solution C (trehalose added: 5%) was subjected to the same procedures as above until the heat treatment under pressure among the series of treatment steps and turned brown. The preparation thus obtained before cooling to 4°C was kneaded using a twin-shaft mixer (produced by Irie Shokai Co., Ltd.) having blades with a diameter of 60 mm, a distance between shafts of 50 mm, and a twist angle of 60°, with the blades rotated in the same direction) at a temperature of 60 to 80°C (rotation conditions; whey processed food F: 0 rpm, G: 10 rpm, H: 50 rpm, I: 100 rpm). The product was then extruded by an extruder to obtain solid whey processed foods F to I (solids concentration: 84%).

### (2) Determination of lactose content (mass %) in whey processed food

The lactose content of the whey processed food (100%) was determined using high-performance liquid chromatography (HPLC).

Whey processed foods A to I produced in the manner described above were prepared as 10% solutions using Milli-Q water, passed through a 0.2 µm mesh filter. The solutions were then further diluted 10-fold with Milli-Q water. The obtained solutions were used as test samples and subjected to HPLC under the following conditions.
HPLC conditions
HPLC instrument: Agilent 1200 (produced by Agilent Technologies, Inc.)
Stationary phase: Supelco apHera^{™} NH₂ HPLC Column Mobile phase: 68% acetonitrile
Elution rate: 1.0 ml/min
Detector: RI detector.

Based on a calibration curve previously prepared using lactose crystals (standard)(a calibration curve showing the correlation between the amount of lactose and its peak area), the lactose content of each test sample was determined from the lactose peak area obtained for the test sample. The lactose content of whey processed foods A to I was calculated therefrom.

### (3) Proportion (%) of lactose crystals in whey processed food

Using whey processed foods A to I produced as described above and sliced to a thickness of 0.5 mm as test samples, the amount of lactose crystals in each whey processed food was determined using an X-ray diffractometer (SmartLab X-ray diffractometer, produced by Rigaku).

Specifically, a test sample (one piece) was placed on the glass cell attached to the X-ray diffractometer in such a manner that the thickness of 0.5 mm of the test sample is in vertical direction, and X-ray diffraction images were measured with the X-ray diffractometer. Note that in the measurement of an X-ray diffraction image of lactose crystals (standard product) with the X-ray diffractometer, several peaks derived from lactose crystals are detected in the range of 2θ = 19.9 to 20.4°, of which the largest peak is defined as the main peak. Subsequently, the obtained X-ray diffraction images of each test sample were subjected to smoothing and subtraction of the base part. Among the peaks of the test sample detected in the range of 2θ = 19.9 to 20.4°, the peak corresponding to the main peak of the lactose crystals (standard) was defined as the target peak and its peak area was determined.

Subsequently, based on the main peak area of the lactose crystals (standard) measured in the same manner as above, the percentage of the peak area of lactose crystals in each of whey processed foods A to I was determined to calculate the proportion (%) of lactose crystals in each whey processed food according to the following formula. Proportion of lactose crystals in whey processed food (%) = B/A × 100
A: Area of the main peak of the lactose crystals (standard product) at 2θ = 19.9 to 20.4°
B: Area of the peak of each whey processed food (test sample) corresponding to the main peak

### (4) Proportions of coarse lactose crystals and fine lactose crystals in whey processed food

The whey processed foods prepared above were sliced to a thickness of 0.5 mm and used as test samples. About 1 mg of each test sample was placed on a glass slide and a cover glass was placed thereon in such a manner that the test sample was crushed and covered with the cover glass (the crush method). Each preparation thus prepared was observed in fifteen fields of view under a phase-contrast microscope (objective magnification: x10, total magnification: x10) (number of fields of view: 15). After the images obtained by observation in the fifteen fields of view were binarized into the background and particles (lactose crystals particles), the total number of particles was counted. Subsequently, the horizontal projected area of each particle (each lactose crystal) was measured and the equivalent circle diameter of each particle was calculated. Particles with a equivalent circle diameter of 30 µm or more were classified as coarse lactose crystals, whereas particles with a equivalent circle diameter of 10 µm or less were classified as fine lactose crystals. The number of coarse lactose crystal particles and the number of fine lactose crystal particles were determined.

Subsequently, the total area of all the lactose crystal particles was obtained by adding up the horizontal projected area of each of all particles (lactose crystals) included in the field of view. In the present invention, this is also referred to as "the total area of the lactose crystals." The total area of the coarse lactose crystal particles was determined by integrating the horizontal projected area of the particles corresponding to coarse lactose crystals among all the particles (lactose crystals) included in the field of view. This is also referred to as "the total area of the coarse lactose crystals" in the present invention. Further, the total area of the fine lactose crystals particles was determined by adding up the horizontal projected area of the particles corresponding to fine lactose crystals among all the particles (lactose crystals) included in the field of view. In the present invention, this is also referred to as "the total area of the fine lactose crystals."

Taking the total area of lactose crystals as 100% (reference), the proportion (%) of the total area of coarse lactose crystals and the proportion (%) of the total area of the fine lactose crystals were calculated, respectively, and defined as the proportion of coarse lactose crystals and the proportion of fine lactose crystals in the lactose crystals.

### (5) Protein content of whey processed food: Kjeldahl method

After about 1.5 g of the whey processed food produced as described above was weighed and diluted or dissolved in warm water, the resulting dilution or solution was transferred to a 100 ml volumetric female flask, cooled, and adjusted to a constant volume with water. 20 ml of this dilution was placed in a decomposition flask. After a decomposition accelerator (Kjeltab C) and 12 ml of sulfuric acid were gradually added and mixed, 8 ml of hydrogen peroxide was added and mixed. Subsequently, the resulting mixture was heated and decomposed in a decomposition apparatus to convert nitrogen into ammonia. After the liquid in the decomposition flask became transparent and turned blue due to copper sulfate, it was cooled and then diluted by gradually adding 50 ml of water. The dilute was then distilled in a Kjeldahl distillation apparatus.

Specifically, an excess amount of sodium hydroxide was added to the decomposition liquid (H₂SO₄ containing (NH₄)₂SO₄) to make the liquid alkaline, and the resulting mixture was heated with steam to release ammonia again. Free ammonia was steamdistilled and collected in an aqueous boric acid solution. The ammonia collected was titrated with a sulfuric acid standard solution to determine the amount of nitrogen. The amount of nitrogen was multiplied by a nitrogen protein conversion factor (6.38) to calculate the protein content.

### (6) Lipid content of whey processed food: Reese-Gottlieb method

About 1 g of the whey processed food produced as above was dispersed in 2 ml of aqueous ammonia. Subsequently, 10 ml of ethanol was added, and the resulting mixture was then extracted with 25 ml of diethyl ether and 25 ml of petroleum ether. As a second extraction, extraction was performed with 15 mL of diethyl ether and 15 mL of petroleum ether. The collected extract was dried to a solid, and the weight of the dried solid was measured, which was defined as the lipid content of the test sample.

### (7) Texture evaluation of whey processed food

The "texture on the tongue" and "non-stickiness to the teeth" of whey processed foods A to I produced above were evaluated by a sensory evaluation panel consisting of four trained analytical experts (training period: 5-15 years). Note that whey processed foods A to I were stored at a constant temperature of 10°C and a constant humidity of 50% for 1 hour before being subjected to texture evaluation.

The "texture on the tongue" and "non-stickiness to the teeth" of each whey processed food were evaluated according to the following criteria.
(i) Texture on the tongue: the presence or absence of roughness
   or smoothness felt on the tongue during eating,
   evaluated on the following five-point scale.
   5 (best): no roughness at all, very smooth
   4 (good): almost no roughness, very smooth
   3 (fair): slightly rough, but smooth
   2 (poor): rough and not smooth
   1 (worst): significant rough, not smooth at all.
(ii) Non-stickiness to the teeth: resistance to release from the teeth felt due to adhesion to the teeth during chewing.
   5 (excellent): no adhesion to the teeth, no resistance to release felt (excellent non-stickiness to the teeth)
   4 (good): almost no adhesion to the teeth, and little resistance to release felt (good non-stickiness to the teeth)
   3 (fair): some adhesion to the teeth, but little resistance to release felt (good non-stickiness to the teeth)
   2 (poor): adhesion to the teeth, and the resistance to release felt (poor non-stickiness to the teeth)
   1 (very poor): significant adhesion to the teeth, strong resistance to release felt (very poor non-stickiness to the teeth).

In conducting the texture evaluation, the entire panel compared and reconciled the characteristics in each evaluation item to share a common understanding among the panelists. Each evaluation was conducted by each panelist. Subsequently, the panel as a whole discussed the evaluation results. The overall evaluation results of the entire panel were thus obtained as the final results.

Further, a comprehensive evaluation was conducted from the results of both the texture on the tongue and non-stickiness according to the following criteria:
Comprehensive evaluation
A: Texture is 5 and non-stickiness is 4 or higher.
B: Texture and non-stickiness are both 4.
C: Either texture or non-stickiness is rated 3 or lower.
D: Either texture or non-stickiness is rated 2 or lower.

### (8) Experimental Results

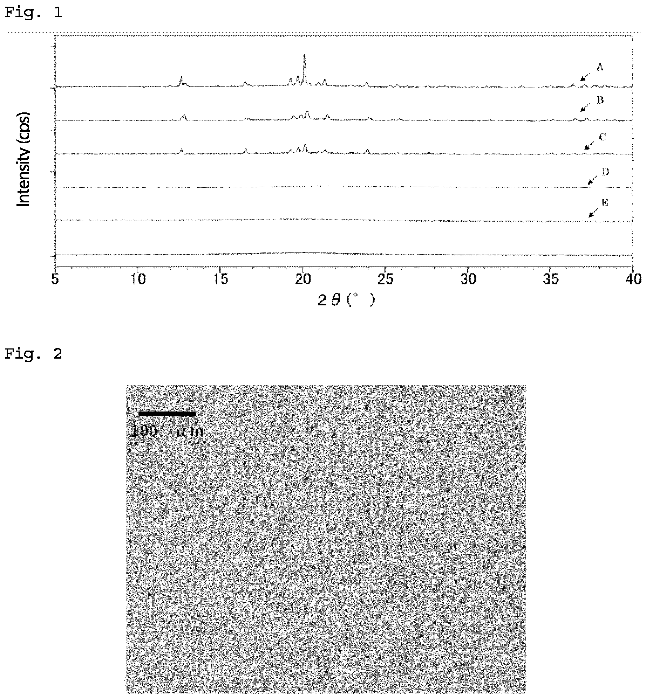

Fig. 1 shows the results of measuring the X-ray diffraction images of whey processed foods A to E (the results of A to E are shown from top to bottom). Table 2 shows the results of the lactose content (%), the proportion of lactose crystals (%), the proportions of coarse crystals and fine crystals in lactose crystals (%), and texture evaluation. The lactose contents of whey processed foods A to E were in the range of 39 to 49%.

**Table 2**

| Whey processed food | Proportion of lactose crystals (%) | Texture evaluation | | |
|---|---|---|---|---|
| | | Texture on the tongue | Non-stickiness to the teeth | Comprehensive evaluation |
| A | 10 | 1 | 5 | D |
| B | 4 | 3 | 4 | C |
| C | 3 | 4 | 4 | B |
| D | 0 | 5 | 1 | D |
| E | 0 | 5 | 1 | D |

The lactose content (%), the proportion of lactose crystals (%), the proportions of coarse crystals and fine crystals in lactose crystals (%), and the texture of whey processed foods F to I were evaluated. Table 3 shows these results. The lactose content, protein content, and lipid content of the whey processed foods were 54% (in terms of solids content), 9% (in terms of solids content), and 26% (in terms of solids content), respectively, based on the solids content of the whey processed foods taken as 100 mass%.

**Table 3**

| Whey processed food | Lactose content of the whey processed food (%) | Proportion of lactose crystals in whey processed food (%) | Proportion in the lactose crystals taken as 100% | | Texture evaluation | | |
|---|---|---|---|---|---|---|---|
| | | | Proportion of coarse crystals | Proportion of fine crystals | | | |
| | | | | | Texture on the tongue | Stickiness to the teeth | Comprehensive evaluation |
| F | 45 | 3 | 35 | 3 | 4 | 4 | B |
| G | 45 | 5 | 16 | 57 | 4 | 4 | B |
| H | 45 | 4 | 8 | 72 | 5 | 4 | A |
| I | 45 | 3 | 0 | 97 | 5 | 4 | A |

| | | | | | | | |
|---|---|---|---|---|---|---|---|
| Coarse crystals: lactose crystals with an equivalent circle diameter of 30 µm or more. Fine crystals: lactose crystals with an equivalent circle diameter of 10 µm or less. | | | | | | | |

As shown in Table 2, the results confirmed that the roughness felt on the tongue tends to be improved and becomes smoother as the proportion of lactose crystals in the whey processed food is reduced; however, if the proportion of lactose crystals is extremely low, the whey processed food is smooth but tends to stick to the teeth during chewing, thus resulting in poor non-stickiness to the teeth (see the results of whey processed foods D and E). The results shown in Tables 2 and 3 confirm that by adjusting the proportion of lactose crystals in the whey processed food to approximately 3 to 5%, smoothness and good non-stickiness can both be achieved.

The results in Table 3 confirmed that whey processed foods having the following characteristics have good non-stickiness to the teeth and extremely smooth texture on the teeth, thus being the best whey processed food excellent in terms of both smoothness and non-stickiness (see the results of whey processed foods H and I). Characteristics:
the proportion of lactose crystals in the whey processed food is about 3 to 5%;
the proportion of coarse lactose crystals with a lactose crystal size of 30 µm or more in the lactose crystals is 10% or less, and the proportion of fine lactose crystals with a lactose crystal size of 10 um or less in the lactose crystals is 70% or more,
wherein the proportion of the coarse lactose crystals in the lactose crystals is a percentage of the total area of coarse lactose crystal particles, and the proportion of the fine lactose crystals in the lactose crystals is a percentage of the total area of fine lactose crystal particles, based on the total area of lactose crystal particles in the whey processed food taken as 100%, as determined by phase-contrast microscopy.

Fig. 2 shows an image of the structure of whey processed food I under a phase-contrast microscope (objective magnification: x10, total magnification: x10).

With respect to whey processed foods with a lactose content of 39 to 49 mass%, in particular, the whey processed foods with a lactose content of 45 mass%, Experimental Example 1 showed the relationship between the texture (smoothness and non-stickiness) and the proportion of lactose crystals in the whey processed food and the proportions of coarse lactose crystals and fine lactose crystals in the lactose crystals. With respect to whey processed foods with a lactose content of 20 to 51 mass% as well, when the proportion of lactose crystals in the whey processed food was in the range of 3 to 5%, the proportion of coarse lactose crystals in the lactose crystals was 10% or less, and the proportion of fine lactose crystals in the lactose crystals was 70% or more, the resulting whey processed food tended to have good texture with high smoothness and excellent non-stickiness to the teeth.

With respect to whey processed foods with a lipid content of 18 to 25 mass% (whey processed foods with a cream content of 35%), Experimental Example 1 shows the relationship between the texture (smoothness and non-stickiness to the teeth) and the proportion of lactose crystals in the whey processed food and the proportions of coarse lactose crystals and fine lactose crystals in the lactose crystals. Similarly, with respect to whey processed foods with a lipid content of 8 to 30 mass% as well, when the proportion of lactose crystals in the whey processed food was in the range of 3 to 5%, the proportion of coarse lactose crystals in the lactose crystals was 10% or less, and the proportion of fine lactose crystals in the lactose crystals was 70% or more, the resulting whey processed food tended to have good texture with high smoothness and excellent non-stickiness to the teeth.

### Industrial Applicability

The present invention can be used as a means for achieving Sustainable Development Goals (SDGs) and can contribute to the achievement of the Sustainable Development Goals (SDGs) and targets. The present invention can contribute to the achievement of the sustainable development goals, in particular Goal 2 and Goal 3. Specifically, by providing, as a whey processed food, whey, which is a food material with excellent nutritional properties containing large amounts of various essential amino acids, proteins, vitamins, and sugars, the present invention can contribute to providing a safe and sufficient food supply for all people, including young girls, pregnant and lactating women, and the elderly. The present invention can particularly contribute to the achievement of Goal 9 of the Sustainable Development Goals. Specifically, the technique of the present invention, which inhibits the denaturation of whey, has created a new added value for whey and thereby promotes technological development, research, and innovation, such as industrial diversification and the creation of an added value for products, to thereby increase the efficiency of resource use and the expansion and efficiency of industrial processes, whereby innovation can be promoted in a sustainable and resilient manner. Further, the present invention can particularly contribute to the achievement of Goal 12 of the Sustainable Development Goals. Specifically, food loss in production and supply chain companies can be reduced by enabling cheese manufacturers to make effective use of whey, which has often been discarded in cheese production processes, as a whey processed food. Further, sustainable production and consumption patterns can be ensured through sustainable development and development in harmony with nature, for example, by halving food waste.

## Claims

1. A whey processed food comprising lactose in a proportion of 20 mass% or more, wherein
the proportion of lactose crystals in the whey processed food is 3 to 5%, the lactose crystals comprising coarse lactose crystals and fine lactose crystals,
the coarse lactose crystals accounting for 10% or less of the lactose crystals in the whey processed food, and
the fine lactose crystals accounting for 70% or more of the lactose crystals in the whey processed food; and
wherein, based on the area of the main peak of lactose monohydrate crystals (standard) detected in the range of 2θ = 19.9 to 20.4° in an X-ray diffraction pattern measured using an X-ray diffractometer,
the proportion of the lactose crystals is calculated from the peak area of a test whey processed food at the position corresponding to the position of the main peak of the lactose monohydrate crystals (standard);
the proportion of the coarse lactose crystals in the lactose crystals is a percentage of the total area of coarse lactose crystal particles, based on the total area of lactose crystal particles in the whey processed food taken as 100%, as determined by phase-contrast microscopy; and
the proportion of the fine lactose crystals in the lactose crystals is a percentage of the total area of fine lactose crystal particles, based on the total area of lactose crystal particles in the whey processed food taken as 100%, as determined by phase-contrast microscopy.

2. The whey processed food according to claim 1, wherein the whey processed food is brown whey cheese, gjetost, or caramel.

3. A method for imparting to a whey processed food a smooth texture on the tongue and less adhesion to the teeth during chewing, the whey processed food comprising lactose in a proportion of 20 mass% or more,
the method comprising
adjusting the proportion of lactose crystals in the whey processed food to 3 to 5%, the lactose crystals comprising coarse lactose crystals and fine lactose crystals,
adjusting the proportion of the coarse lactose crystals to account for 10% or less of the lactose crystals in the whey processed food, and
adjusting the proportion of the fine lactose crystals to account for 70% or more of the lactose crystals in the whey processed food,
wherein, based on the area of the main peak of lactose monohydrate crystals (standard) detected in the range of 20 = 19.9 to 20.4° in an X-ray diffraction pattern measured using an X-ray diffractometer, the proportion of the lactose crystals is calculated from the peak area of a test whey processed food at the position corresponding to the position of the main peak of the lactose monohydrate crystals (standard);
the proportion of the coarse lactose crystals in the lactose crystals is a percentage of the total area of coarse lactose crystal particles, based on the total area of lactose crystal particles in the whey processed food taken as 100%, as determined by phase-contrast microscopy; and
the proportion of the fine lactose crystals in the lactose crystals is a percentage of the total area of fine lactose crystal particles, based on the total area of lactose crystal particles in the whey processed food taken as 100%, as determined by phase-contrast microscopy.
